# EUROPEAN PATENT APPLICATION

(11) **EP 2 296 321 A1**
(43) Date of publication of application: **16.03.2011**
(21) Application number: 10182883.8
(22) Date of filing: 26.06.2007
(51) Int. Cl.: H04L 12/54, H04L 29/06, H04L 9/00, H04L 12/58

(54) **Extensions to SIP signalling to indicate spam**

(30) Priority: 26.06.2006 US 816739 P; 28.12.2006 US 646682
(62) Divisional of application: 07720053.3
(71) Applicant: Nortel Networks Limited, St. Laurent, QC H4S 2A9 (CA)
(72) Inventor: Srivastava, Samir, Fremont, CA CA 94539 (US)
(74) Representative: Borton, Claire

(57) **Abstract**

The invention comprises a method of determining an identity of an entity placing a call, the method comprising the steps of: analyzing a signal sample associated with the entity placing the call; performing a signal source recognition process on the signal sample to obtain a signal signature associated with the entity placing the call; and comparing the signal signature against signal signatures of entities known to place unsolicited calls; and determining if the call is likely to be an unsolicited call from the result of the signal signature comparison.

## Description

### Field of the Invention

The present invention relates to communication networks and, more particularly, to a method and apparatus for using extensions to SIP signaling to indicate the presence of SPAM in a multimedia network.

### Description of the Related Art

Data communication networks may include various routers, switches, bridges, hubs, and other network devices coupled to and configured to pass data to one another. These devices will be referred to herein as "network elements." Data is communicated through the data communication network by passing protocol data units, such as Internet Protocol (IP) packets, Ethernet Frames, data cells, segments, or other logical associations of bits/bytes of data, between the network elements by utilizing one or more communication links between the devices. A particular protocol data unit may be handled by multiple network elements and cross multiple communication links as it travels between its source and its destination over the network.

As communication networks have proliferated, corporations and individuals have become reliant on the networks for many different types of communication services. One type of common communication service is the ability to transmit e-mail messages on the network. Since transmission of e-mail messages is generally free, fast, and reliable, e-mail has become a very popular way of communicating over a communication network.

Unfortunately, many individuals and corporations determined that e-mail would be a cheap way of advertising particular products, both wanted and unwanted. Accordingly, e-mail has become commonly used to send unsolicited information. Unsolicited e-mail is commonly referred to as SPAM, and may take many forms, although SPAM generally is of a commercial nature and is sent in bulk form to many recipients. The transmission of SPAM on the Internet has increased to such an extent that at one point it was estimated that about 90% of all e-mail messages sent on the Internet were SPAM.

Because of the proliferation of SPAM, many e-mail services and network providers are beginning to provide anti-SPAM screening products and services. These products generally filter SPAM at an email server or at the user's personal computer so that the unsolicited e-mail messages do not get grouped together with other legitimate e-mail messages. SPAM filters generally detect SPAM messages by looking at the sender's source address, the subject line of the e-mail message, and other aspects of the e-mail.

Initially, voice communications were carried on a voice network, and data communications such as e-mail were carried on a separate data (Internet Protocol or IP) network. For various reasons, those networks are being consolidated so that voice calls may be made over data networks using a protocol commonly referred to as Voice over IP (VolP). VolP uses the Session Initiation Protocol (SIP) or another signaling protocol to establish a voice call on an IP network, and then uses the transport facilities of the IP network to enable the parties to talk in the same manner as would occur if the voice call had been connected over the voice network.

Although VolP has the potential to reduce the costs associated with making telephone calls, it also potentially presents a new problem. Specifically, the reduction in cost and difficulty of making an Internet based telephone call has provided an opportunity for SPAM to be delivered over Internet Telephony. Thus, Internet telephony may potentially be abused in the future in the same manner that e-mail has been abused on the current networks. Unfortunately for telephone users, Spam over Internet Telephony (SPIT) is likely to be more intrusive than SPAM has been, since SPIT has the potential to cause a telephone to ring at the user's place of business or home in real time. Thus, unlike SPAM which may be ignored, SPIT has the potential to be quite intrusive.

Other forms of SPAM are also being developed. For example, SPAM over Instant Messaging (SPIM), SPAM over Fax (SPOF), have been reported. Additionally, if video telephony becomes prominent, it is possible that that new media may become abused to transmit SPAM video messages.

### Summary of the Invention

SIP signaling may be used to indicate that a multimedia or voice session is SPAM. When a called party receives a call or other communication and determines that the call is SPAM, the called party may use a new SIP method type, SIP header, extension to an existing header, SIP error code, or SDP message carried within a SIP message body, to indicate that the session is related to SPAM or to communicate the identity of the person that has sent an unsolicited communication. The SPAM signaling may be performed before the called party has been alerted, by an intermediate network element/service, or by the called party after the session has been established. Additionally, SIP signaling may be used to indicate the presence of SPAM after the session has been torn down. The SPAM indication mechanism may be used whenever SIP signaling is used to establish a session, including for voice telephone calls, Instant Messaging session/page mode, Audio/Video Session, Presence information exchange, FAX, or any combination of these media types.

### Brief Description of the Drawings

Aspects of the present invention are pointed out with particularity in the appended claims. The present invention is illustrated by way of example in the following drawings in which like references indicate similar elements. The following drawings disclose various embodiments of the present invention for purposes of illustration only and are not intended to limit the scope of the invention. For purposes of clarity, not every component may be labeled in every figure. In the figures:
FIG. 1 is a functional block diagram of an example of a network in which anti-SPX services may be deployed to detect unsolicited multimedia communications to reduce unwanted SPX on the network according to an embodiment of the invention;
FIG. 2 is a flow chart illustrating an example process of analyzing a facsimile transmission to determine if it is unsolicited;
FIG. 3 is a flow chart illustrating an example process of analyzing voice and video telephony transmissions to determine if they are unsolicited; and
FIG. 4 is a functional block diagram of an example of a network in which SIP signaling may be used to establish a voice or multimedia session.
FIG. 5 is a functional block diagram of an example illustrating the transmission of SIP messages between network components and several possible locations of SDS functionality on the network;
FIG. 6 is a flow chart illustrating an example process of using SIP signaling to indicate the presence of SPAM;
FIG. 7 is a functional block diagram of a computer platform configured to implement an anti-SPX service and SDS functionality described herein according to an embodiment of the invention; and
FIG. 8 is a diagram of a SIP message.

### Detailed Description

The following detailed description sets forth numerous specific details to provide a thorough understanding of the invention. However, those skilled in the art will appreciate that the invention may be practiced without these specific details. In other instances, well-known methods, procedures, components, protocols, algorithms, and circuits have not been described in detail so as not to obscure the invention.

There are several different types of SPAM, the format of which depends on the particular type of communication medium being used. In the following description, the following terms will be used to refer to the different types of SPAM:
1) SPIT (SPAM over Internet Telephony) - used to refer to unsolicited voice/video calls, as well as for Session mode Instant Messaging (IM);
2) SPIM (SPAM Over Instant Messaging) - used to refer to unsolicited Page mode IM;
3) SPOP (SPAM Over Presence) - used to refer to unsolicited presence event SUBSCRIBE requests;
4) SPOF (SPAM Over Fax) - used to refer to unsolicited Fax calls;
5) SPOM (SPAM Over Multimedia) - used to refer to unsolicited session request, where the type of media is not relevant; and
6) SPOV (SPAM over Video Telephony)-used to refer to unsolicited video telephone calls.

Although SPAM is commonly used to refer to unsolicited email, as used herein SPAM will be used generically to refer to any type of unsolicited communication. When used in connection with e-mail, the term "e-mail SPAM" will be used. Similarly, the term "SPX" will be used to refer to e-mail SPAM, SPAM over Instant Messaging (SPIM), SPAM over Fax (SPOF), SPAM over Internet Telephony (SPIT), SPAM over Video Telephony (SPOV), and other types of unsolicited multimedia communications.

Multimedia, as used herein, will be used to refer to multiple types of media, any one or more of which may be used to generate unwanted SPX. Thus, one media may be e-mail, another media may be instant messaging, another media may be VoIP, etc. Thus, although the term "Multimedia" normally refers to a production such as a movie that is made using multiple types of media, the term "Multimedia" in this application is being used differently to refer to a service that is able to detect unsolicited content that may have been produced using any one or more of a number of different available medias.

A device that is capable of multimedia detection, therefore, is a device that can detect unsolicited content generated using multiple types of media, although any one particular message may be produced using only one or more of the available media. For example, a multimedia detection device may be able to scan VoIP traffic, e-mail traffic, and instant messaging traffic. The invention is not limited to this particular example, however, as the multimedia detection device may be configured to scan different combinations of types of traffic depending on the particular application for which it is designed.

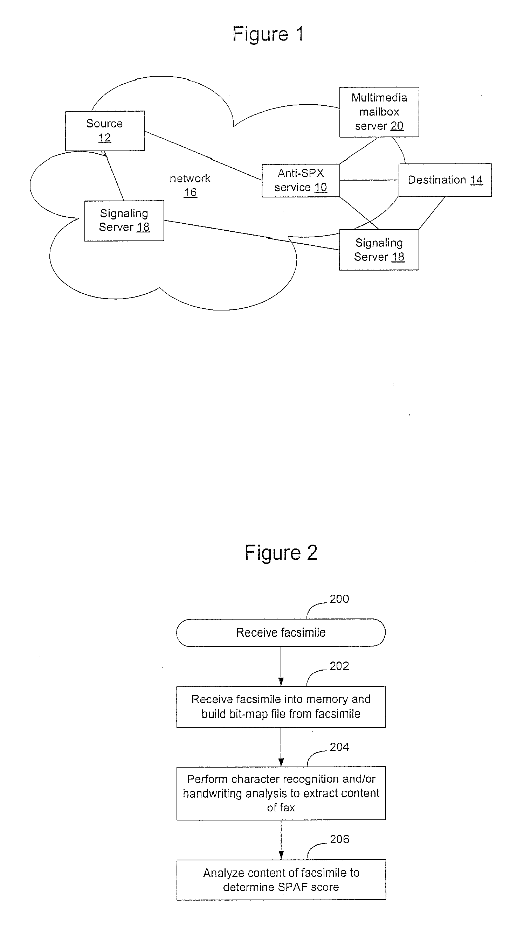

FIG. 1 shows an example network in which anti-SPX services may be deployed to detect unsolicited multimedia communications to reduce the amount of unwanted SPX that is passed directly to the destination. As described in greater detail below, SIP Signaling may be used as part of the anti-SPX service, in connection with the anti-SPX service, or independent of the anti-SPX service, to enable users to provide feedback as to which multimedia sessions are associated with SPAM. The network components configured to handle the SPAM signaling (SIP signaling associated with SPAM indication) are referred to herein as SPAM Detection Services (SDS). The SDS functionality may be integrated with the anti-SPX service or may implemented independently on the network elements forming the network.

Anti-SPX services may be used in multiple environments. FIG. 1 illustrates a generic example in which an anti-SPX service 10 is deployed intermediate a SPX source 12 and a SPX destination 14 on a communication network 16. The anti-SPX service 10 may be operated on a network element such as a router forming part of the network 16, may be operated in connection with a gateway between different administrative portions of the network 16, or may be operated in connection with other services to be provided on the network 16. For example, the anti-SPX service may be operated in connection with a signaling server 18 and/or a multi-media mailbox server 20. The invention is not limited to the particular environment in which the anti-SPX service 10 is configured to operate.

When a message is to be passed from the SPX source 12 to the SPX destination 14, the anti-SPX service 10 will receive the message or a copy of the message and attempt to determine if the message is SPX. For example, in connection with an e-mail message, the anti-SPX service 10 will perform standard SPAM detection processes to determine if the e-mail message is SPAM. Similarly, in connection with instant messaging messages, the anti-SPX service 10 will perform standard SPIM detection processes to determine if the instant message is SPIM. Since SPAM and SPIM detection processes are well known, additional details will not be provided with respect to these aspects of the anti-SPX service 10.

FIG. 2 illustrates a process that may be used by the anti-SPX service 10 in connection with detecting whether a facsimile is SPOF. As shown in FIG. 2, when the anti-SPX service 10 receives a fax 200, it will receive the fax 200 into memory to build a bit-map file of the fax (202). Character recognition and/or handwriting recognition may be performed to extract the content from the fax (204). For example, optical character recognition software generally converts optical characters into bitmap files and then compares the bitmap files against known bitmaps associated with characters to identify the particular characters that are shown in the file. A similar process may be used once a bitmap of the facsimile has been created so that character recognition may be used to determine the content of the facsimile. Similarly, handwriting analysis may be used to determine the content of hand-written material contained in the facsimile.

Once the content of the facsimile has been extracted, the content of the facsimile may be analyzed to determine if the facsimile is likely to be SPOF. The content analysis of the facsimile may be similar to the content analysis that is commonly performed in connection with e-mail transmissions and instant messaging transmissions. For example, the content may be analyzed to determine the identity of the sender, which is likely to be in the header or in a "from" line, of the facsimile. Also, the content may be analyzed to detect the prevalence of key words that are commonly used to advertise particular goods or are identified as being likely to be prevalent in SPOF transmissions. Other content analysis techniques may be used as well and the invention is not limited to the particular manner in which the content is analyzed once it is extracted from the fax.

Although an embodiment in which store and forward processing has been used to determine whether a facsimile is SPOF, the invention is not limited in this regard, as content analysis may also be performed for real-time facsimile transmissions. Thus, the invention is not limited to the particular way in which the facsimile transmission is established on the network. Accordingly, the underlying facsimile session may be established using any facsimile protocol such as protocols designed to support group 2/3/4 facsimile machines on the legacy voice network, T.38 which is designed to support Fax over Internet Protocol (FoIP), or other types of facsimile protocols.

As a result of the content analysis, the anti-SPX service will generate a SPOF score (206) that may be used to determine whether the facsimile is likely to be SPOF or likely to be a legitimate facsimile. The facsimile may then be transmitted to the destination 14 or an alternate way of communicating the availability of the facsimile may be used to notify the destination 14. Optionally the SPOF score may be communicated to the destination to enable the destination to determine whether they would like to receive the facsimile. For example, the facsimile may be stored temporarily (e.g. in the multimedia mailbox server) and an e-mail notification may be sent to the destination. The invention is not limited to the particular manner in which the facsimile is handled after detecting the possibility that a particular facsimile is likely to be SPOF.

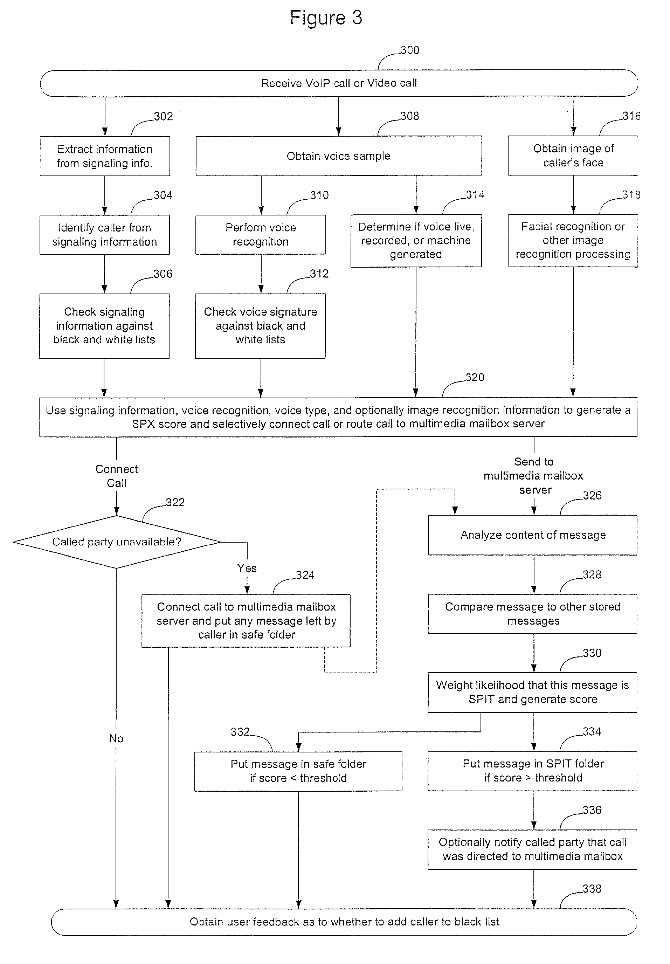

FIG. 3 illustrates a process that may be used by the anti-SPX service 10 in connection with detecting whether a voice call, such as a VoIP call or video call, is likely to be SPX. Since both voice and video calls are likely to include an audible component, similar audio processing may be performed on each of these types of calls. In connection with a video call, the anti-SPX service may additionally provide image recognition on the video portion of the call. Hence, because of the common audio aspect, these two types of call processing have been described commonly in FIG. 3. It should be recognized, however, that not all of the processes illustrated in FIG. 3 will apply to calls that don't include video content.

In the embodiment shown in FIG. 3, when a voice or video call is received (300) the anti-SPX service will extract signaling information (302) and attempt to identify the caller from the signaling information (304). Examples of signaling information include information available from exchanges formatted according to Session Initiation Protocol (SIP), H.323, Media Gateway Control Protocol (MGCP), or other standardized or proprietary protocols. Signaling protocols continue to evolve and new protocols are being developed and the invention is not limited to the use of signaling information from currently implemented protocols as aspects of the invention are likely to be useable in connection with other to be developed protocols. Additional information on the use of SIP signaling to enable a recipient to indicate SPX is described in greater detail below.

Whatever form of signaling information is available may then be checked against black and/or white lists (306) in a conventional manner to determine if the source 12 is black and/or white listed. Black and white lists may be built using feedback as described in greater detail below. Where signaling information is not available, for example where caller ID information has been blocked, the fact that the signaling information has been blocked may be used by the anti-SPX service as an indication that the call is likely a SPX call. Similarly, if the same caller has made many phone calls within a given period of time, it may be that the call is more likely to be a SPIT call. Hence, if a caller is making many phone calls it may be that the caller is more likely to be a SPIT generator.

The signaling information may also be checked to determine if the call is a conference call. Generally, the signaling information will contain an indication as to whether the call is a conference call and, accordingly, should be connected to multiple destinations. Where the same media is being sent to multiple destinations and the signaling information does not indicate that the call is a conference call, the non conference calls may be treated as SPIT. Similarly, where the same source is attempting to connect to multiple destinations serially, and is repeating the same media stream or similar media streams in connection with each destination, calls from the source may be treated as SPIT unless the source is on a white list. For example, a hospital that is on a white list will be able to make text to speech generated calls to multiple patients without having the calls screened as SPIT. The signaling information may be used in other ways to help determine which calls are SPIT and which are legitimate, and the invention is not limited to these particular examples.

The anti-SPX service 10 may also attempt to obtain a voice sample associated with the call (308) so that voice identification may be performed, and/or voice type identification may be performed. With a voice call, since the voice information doesn't exist until the call is placed to the end user, filtering of voice/video calls based on voice identification may not occur unless a sample is obtained during the connection process. This may be obtained, for example, by causing the call to be temporarily placed in an off-hook condition artificially to cause a connection to be established. The caller may then be prompted to speak their name, a particular phrase, or answer a question, so that a voice sample may be obtained. Other ways of obtaining a voice sample from the source 12 may be used as well and the invention is not limited to the particular manner in which a voice sample is obtained. Where the user refuses to speak, the lack of a voice sample may be used in connection with determining if the call is likely to be SPX.

If a voice sample is obtained from the source 12, a voice recognition process may be performed 310 to obtain a voice signature that may be used to identify the voice or identify a person associated with the source. The voice signature determined from the voice recognition process may be used to check against black and/or white lists of voice signatures known to the anti-SPX service (312) to determine if the source is a known source of SPX or known to the users of the service as not likely to be a source of SPX. Optionally, where the voice sample was obtained by asking the source to answer a question, the content of the voice sample may be extracted using a speech recognition process and the content analyzed to determine if the response is an anticipated response. Where the response is not anticipated, this fact may be taken in to account when determining if the call is likely to be SPX.

The type of voice may also be determined. Specifically, the anti-SPX service may determine if the voice is associated with a live person, is part of a pre-recorded message, or is machine generated (314). A pre-recorded voice or a machine-generated voice is much more likely to be associated with SPX because it is much less costly to transmit 1000 prerecorded or machine generated messages than it is to have a live person deliver the same message 1000 times. Accordingly, the type of voice may be used by the anti-SPX service in connection with determining if the call is likely to be SPX.

Where the call is a video telephony call, a picture of the person placing the call (i.e. a picture of the person at the source) may be transmitted along with the call setup. Where this is present, the anti-SPX service may obtain the image that is transmitted in connection with the call setup (316) and perform face recognition or other forms of image recognition on the image to determine whether the image provides an indication that the call is SPX. For example, where the image is of a known SPX generator, doesn't contain an image of a person, or otherwise indicates that the call is less likely to be a legitimate video telephony call, the anti-SPX service may use this result in connection with determining if the call is likely to be SPX.

Once all of the available information has been gathered, the anti-SPX service will weight the information individually or in one or more combinations to determine whether the call is likely to be SPX (320). Specifically, the anti-SPX service will weight the result of signaling information processing or the lack of signaling information, the result of the voice recognition and optionally content recognition from the voice sample, the result of the voice type processing, an indication of a lack of voice sample, and any result of the image recognition processes, to provide a SPX score. The SPX score may then be used to selectively connect the call to the destination 14 or to route the call to another location such as to multimedia mailbox server 20.

If the determination by the anti-SPX server is that the call should be connected, the call will be passed to the destination 14 to be handled in a conventional fashion. For example, the call may be routed to the intended recipient so that the phone associated with the called party may ring, blink, vibrate, or otherwise notify the called party that a call is being received. If the called party declines to answer the call or if the called party is already on another call (322), the call may be transferred to multimedia mailbox (324) so that the calling party may leave a message on the multimedia mailbox server. The message in this instance may be stored in a safe folder so that the called party may quickly retrieve that message at a later time without requiring the called party to sort through junk messages as well as valid messages. Optionally, the message may be analyzed as described below and as shown by the dashed line in FIG. 3.

If the anti-SPX service determines that the call is likely to be SPX, it may cause the call to be sent to the multimedia mailbox server so that the content of the call may be analyzed. By sending the call directly to the multimedia mailbox server, the destination will not be notified of the incoming call and, hence, will not be notified every time a SPIT call arrives. Alternatively, the call may be routed to an anti-SPIT processing center such as an answering center and connected to a live person who will screen the call.

When a call is sent to the multimedia mailbox server, the multimedia mailbox server may cause the content of the SPX to be analyzed (326) to determine whether the SPX should be stored in a safe folder or a SPIT folder. The multimedia mailbox server may perform this process alone or in connection with the anti-SPX service. Optionally, the anti-SPX service may perform this processing itself by causing the content of the message to be transferred back to the anti-SPX system once delivery of the message has been completed, or by causing a copy of the message to be stored in a temporary storage area while it is being delivered to the multimedia mailbox server 20.

As shown in FIG. 3, the content of a message may be analyzed (326) to determine if it is SPX. For example, voice recognition, voice type analysis, and content analysis may be performed on the message to determine whether the message was likely generated as a result of SPX. The processes of determining the voice recognition, voice type, and content may be performed in the manner described above in connection with analyzing the voice sample.

Other processes may also be used to determine if the message is SPX. For example, the content of the message may be compared to other stored messages (328). Where the message is identical to other messages or sufficiently similar to other messages, it may be determined to be more likely to be SPX.

Once the content is analyzed, the anti-SPX server may weight the factors associated with a particular message, such as by counting the number of keywords matched in a particular message, weighting the particular key words, determining the type of voice, the identity of the person sending the message as determined by the voice-recognition process, and other factors, and then generate a score as to whether the message is likely to be SPX (330). Optionally, where present, the anti-SPX server may consider the Security Assertion Markup Language (SAML) assertion in connection with generating the score. SAML is an XML standard for exchanging authentication and authorization data between security domains. Other XML formats may be used or developed as well, and the invention is not limited to the use of SAML.

Where the weighting process indicates that the likelihood is below a particular threshold, the message may be stored in a safe folder for the user (332). If, however, it is determined that it is more likely that this message is SPIT, the message may be place in a special folder designated as containing messages that are likely to be SPIT (334). The use of two folders may allow an user to prioritize reviewing messages deemed more likely to be legitimate so that the user is not required to listen to SPIT messages intermixed with legitimate messages.

Regardless of whether the call is directly connected, directly sent to the user's safe folder in e-mail, analyzed and then sent to the safe folder, or analyzed and sent to a SPIT folder, the user may be provided with an opportunity to provide feedback as to whether the call was legitimate or SPIT (338). The use of this feedback may help the anti-SPX service fine-tune the system so that it is able to identify SPX more accurately in connection with future voice and video calls. Similarly, where a message is identified as SPX, the user may provide feedback to indicate to the anti-SPX server that this message is not SPX and that, optionally, the caller should be added to the white list so that future communications from this caller are allowed to be transmitted through to the destination or other associated destinations.

One way in which feedback may be provided is through the use of a signaling protocol such as Session Initiation Protocol (SIP). SIP is a well known signaling protocol that is defined in several Internet Engineering Task Force (IETF) Request For Comments (RFCs), including RFC #2543, 2976, and 3261, the content of each of which is hereby incorporated herein by reference. Although an embodiment of the invention will be described in which the current version of SIP may be extended to enable users to provide feedback when SPAM is received, the invention is not limited to use with the current version of SIP as similar mechanisms are likely to be able to be used in connection with subsequent versions of SIP as well.

SIP has two basic messages-requests and responses. A request message has a request line that starts with a method token followed by a request URI and the protocol version. There are six different types of requests (method types) although other method types (extensions) have been proposed. Several of the current methods types that may be used in connection with a request message are:
Registe - used to convey information about a user's location to a SIP server;
Invite - used to ask another user to participate in a session;
ACK - used to confirm another message;
Options - used to query the capabilities of the server/end system;
Bye - used to release a call; and
Cancel - used to cancel a pending request such as to cancel an Invite request;
Other method types, such as Subscribe, Notify, Refer, Message, and Publish may be used as well and the invention is not limited to the use of a particular message type. Rather, any of the message types or a new message type may be extended to indicate SPAM as described in greater detail herein.

In addition to request messages, there are response messages. The response messages indicate the status of the server and/or whether the request is successful. The response message includes a response code, which is a three digit number indicating the particular response to be returned to the server that sent the request message. 1xx series response codes are informational to indicate an intermediate status of the call, code 200 indicates that the call was successful, 3xx series calls are used to indicate that the call has been redirected; 4xx series codes are used to indicate a request failure; 5xx series response codes are used to indicate a server failure; and 6xx series response codes are used to indicate a global failure.

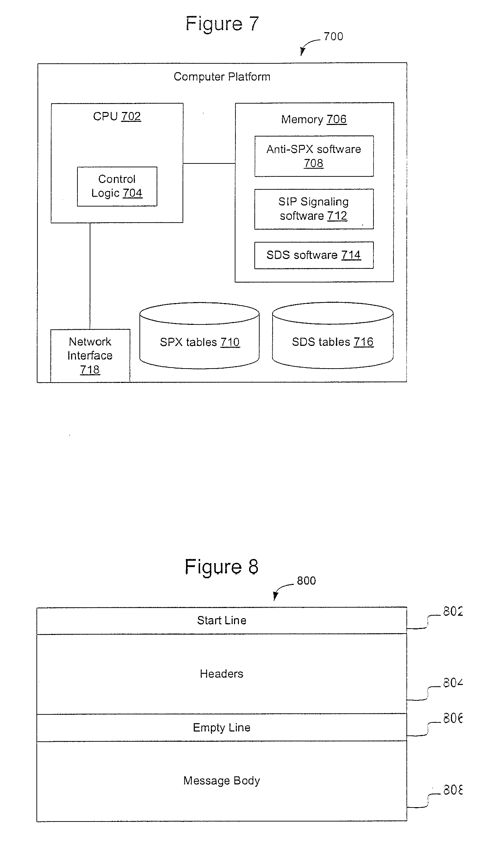

SIP messages all have a common format. Specifically, as shown in FIG. 8, SIP messages have a start line 800, optional headers 802, an empty line 804 separating the headers from the body, and a message body 806 which contains information on the session. There are 37 different headers that may be included in a SIP message in headers portion 802 as per the Internet Engineering Task Force (IETF) Request For Comments (RFC) 3261. Other RFCs such as RFC 3265 define additional headers and they are being defined on an on-going basis. One of these headers may be extended or a new header may be defined to indicate SPAM, as described in greater detail herein. IETF RFC 3261 and 3265 are hereby incorporated herein by reference.

According to an embodiment of the invention, one or more of these features of SIP may be used to indicate SPAM. For example, one of the 37 already defined headers may be extended or a new header may be created that may be used to indicate that a particular session is unsolicited. The new header or extended header may be included in a response message and used by the intermediate SIP servers and/or SDS to determine that a particular session is associated with SPAM.

Alternatively, a new response code may be created, either in one of the existing series such as the 4xx series or in a new series such as a 7xx series. The response code may then be used by network elements receiving the response to determine that a particular session request was determined to be SPAM, so that information associated with the request may be used to update blacklists, etc.

Still alternatively, a new SIP event package or SIP Method extension such as a new message other than Request/Response may be used to indicate SPAM. Other ways of identifying SPAM may be used as well as discussed in greater detail herein.

The following three examples provide general descriptions as to how different SIP signaling mechanisms may be used to communicate the presence of SPAM. The invention is not limited to these particular examples, as the invention may be used in myriad other ways to indicate the presence of SPAM.

### EXAMPLE 1

When a session request is not detected as SPAM by the SPAM Detection Service (SDS) described above in connection with FIGS. 1-3, the called person (callee) may answer a SPAM telephone call and realize that the call is unsolicited. After having realized that the session was a SPAM session, the person that was called may decide to terminate the session by pressing a button, key combination, or otherwise providing an indication to cause the equipment that is being used by the person to signal that the session is SPAM. The feedback may be sent to the SDS and used by the SDS system in connection with establishing and updating personal filters for that particular person and/or for reputation score calculation or blacklisting the caller. Feedback of this nature may also be generated by an intermediate network device such as an answering machine and need not be generated by a person. The feedback may be carried, for example, as a new SIP header in a response message or as an extension to an existing header, such as the Reason header, in a response message so that the presence of SPAM may be indicated. Other SIP mechanisms may be used as well as described in greater detail herein.

### EXAMPLE 2

All sessions requests have to go through the SDS or the anti-SPX service described above before going to the end user (callee). If the SDS, based on its earlier learning from user feedback or user configuration, determines the caller to be a spammer, then it can reject the call outright before connecting the call to the callee. A new SIP error code or other SIP mechanism may be used to indicate the reason for rejecting the call. The response, i.e. error code, helps the SIP proxy of the domain or other domains learn which callers are spammers. Thus, according to an embodiment of the invention, the use of a SIP error code extension may thus be used to indicate the presence of SPAM, and to enable intra-domain cooperation to reduce the amount of SPAM on the network.

Optionally the new error code may be changed to one of the conventional error codes before the person making the SPAM call is notified, to prevent the person making the SPAM call from learning that he has been recognized as a spammer. For example, the error code may be translated to a generic error code such as 400 or 500 before the spammer is notified that the call was not completed.

### EXAMPLE 3

There may be instances where users may wish to notify the SDS asynchronously about earlier SPAM calls. For example, where a SPAM call results in a voice mail being created for the user, the user may wish to be able to notify the ANTI-SPX and/or SDS service that a previous call was a SPAM call. As another example, signature checking/SPAM scoring may be performed on stored voicemail, messages, text messages, etc., as a background process rather than in real time. As still another example, a person generating a SPAM session may continue to send media packets after the session is torn down, in which case blocking the media packets at the firewall itself may not be good enough. These media sources needs to be communicated to the SIP edge proxies so that further session requests with these media sources are blocked. According to an embodiment of the invention, a new SIP event package or SIP Method extension may be used to indicate the presence of earlier SPAM calls that have been previously terminated. For example, a new method may be created and used in connection with a request message to indicate that particular user credentials have been determined to be associated with a person generating SPAM on the network.

The extensions described in connection with Examples 1-3 may be used in any combination to detect different types of SPAM. These mechanisms may be used with different types of SPAM, for example in connection with the different types of SPAM that are described above.

User feedback may be useful in connection with many different types of SPAM. For example, in connection with SPIM and SPOF, since it is possible to inspect these types of communications, user feedback may be used in connection with the identification process to mark suspect SPIM and SPOF before delivery. The user feedback may be used in connection with the particular user who provided the feedback or in connection with other user's accounts to implement personal filters or blacklists to reduce the amount of future SPIM and SPOF from the sender.

In case of SPIT it should be noted that SIP Identity fixes many identity spoofing issues. Spammers cannot lie about the volume of calls being placed. Here accurate statistical analysis in collaboration with reputation scores may be used to enable calls to be blocked by the system before the user is notified. As more volume is fed into the SDS, it will become more effective. According to an embodiment of the invention, SPAM indications in the SIP signaling may be provided to a reputation system, so that the caller's reputation score may be developed over time and used to detect the likelihood of SPAM in connection with future messages from that caller.

In case of SPOP, feedback may be used to detect the assertion of false presence by spammers. By using feedback the SDS may determine which users are engaged in SPAM and block their assertion of presence before the user is notified. The use of feedback may therefore be used effectively in connection with SPOP to detect and deter the presence of SPOP.

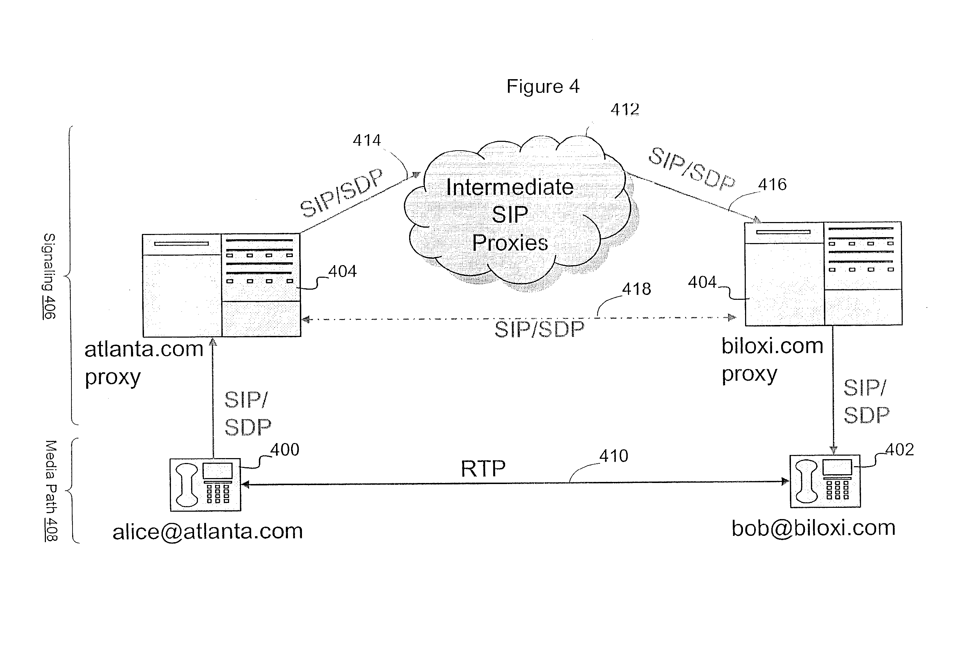

FIG. 4 shows an example network in which SIP signaling may be used to set up and tear down multimedia sessions. As shown in FIG. 4, a session may be created between a user agent client 400 and a user agent server 402. One or more SIP proxy servers 404 forward SIP messages between the user agent client and the user agent server. As shown in FIG. 1, Session Initiation Protocol (SIP) and Session Description Protocol (SDP) may be used to establish a session between the user agent client and the user agent server through the exchange of signaling messages 406. Real Time Protocol (media or voice) may then be used by the parties to exchange information over the media path 408 for the established session 410.

According to an embodiment of the invention, SDS functionality can be built into the SIP proxy 404 of one of the domains. For example in FIG. 4, the SDP functionality may be built into the SIP proxy for the biloxi.com domain or the atlanta.com domain. Alternatively, the SDS functionality may be located in a different server on the network, for example in one of the intermediate SIP proxies 412. The invention is not limited to the use of the SDS functionality at a particular point on the network. The SDS service may or may not be visible to the endpoint, e.g. alice@atlanta.com, depending on whether the network administrator would like the end users to know that their calls are being reported as SPAM.

In the embodiment shown in FIG. 1, the request and response messages flow through a signaling path (solid arrows 406) and the call session 410 is actually handled on a separate media path 408 through the network. Where SPAM signaling is handled in connection with the session setup messages, the indication that a session is SPAM will be handled on the original signaling path 406. However, after the session has been established and/or torn down, and then the called party would like to indicate that the call is SPAM, the signaling may go along a different path through the network. For example, if the called person uses a new method in a new request message, that request message may traverse a different path through the network, although at times it may take the same original path. The invention is not limited by the particular way the SIP messages are routed on the network as different networks may route SIP messages differently depending on the particular network configuration and type of SIP servers being used on the network. Additionally, in-band signaling for example using an extension to the Session Description Protocol (SDP) which is passed within a SIP message body, may be used to signal the presence of SPAM once the session 410 has been set up along media path 408 and is in use by the parties.

Although three examples have been provided, these examples are not intended to be exclusive as the invention may be implemented in many other ways as well. Thus, the invention is not limited to the several uses described in these three examples. Similarly, several ways in which SIP may be extended to indicate the presence of SPAM will now be described. The invention is not limited to the use of SIP, however, as other protocols such as SDP which is carried in a SIP message body may be used to indicate the presence of SPAM as well.

### SIP Header:

One way in which SIP signaling may be used to indicate SPAM is through the use of a new SIP header or an extension to an existing header. If a new header is used, the new SIP header may be created and provided with a particular name, such as Spam. For example, the header may have the following format:

### Spam:spam-value *(generic-params)

In this example, the "spam-value" field is used to contain the Spammers Signature, which is a generic way of referring to information that may be used to identify the person that made the call that has been reported as SPAM. For example, the Spammer's Signature may contain detailed information such as the callee, caller, called, Call ID, media source IP, and other information that may be useful to identify the spammer. By including identifying information on the spammer's identity, the SIP signaling may be used regardless of whether the feedback is provided during the original signaling session or afterwards. IETF RFC 3261 (e.g. page 223/224) provides definitions of SIP headers. The header, according to an embodiment of the invention, may be an extension to one of the existing headers defined according to this RFC or an extension to another header defined in another RFC. Although this particular example will use SPAM as the header name, the invention is not limited in this manner as the SIP header may be provided with any desired name.

SPAM may be also communicated in an extension to an existing header that may be present in either the SIP Request or SIP response messages, or in one of the other SIP messages that may be transmitted according to the SIP protocol. For example, the "reason-extension" might be extended to indicate the presence of SPAM. In this context, the presence of SPAM may be extended in Cause or in Reason-text parameter definitions. The invention is not limited to the particular manner in which the Reason header is extended to indicate the presence of SPAM.

According to another embodiment of the invention, a client-error code may be used to communicate the presence of SPAM. As discussed in IETF RFC 3261, e.g. at page 226, client-error code 400 may be used to indicate a "bad request". According to another embodiment of the invention, a new error code is defined to enable the user server 14 to send an error code indicating a spammed call. Any error code number may be used to indicate spam, and the invention is not limited to the use of a particular error code number. Similarly, the spam indication may be embedded in the 400 bad request error code itself and the invention is thus not limited to the use of a new code but rather extends to the use of modified existing codes as well. The SPAM indication may also be embedded in a Server-Error (5XX series response code) or Global Failure (6XX series response code) or a future extension such as a 7XX series response code. Thus, there are many different ways in which response codes may be used to indicate the presence of SPAM and the invention is not limited to the use of only one particular numeric code.

According to yet another embodiment of the invention, a new method may be defined and used to indicate the presence of SPAM. RFC 3261 at page 225 defines six methods for use in the SIP signaling protocol. Specifically, the methods that are defined in this RFC include INVITE, ACK, OPTIONS, BYE, CANCEL, and REGISTER. According to an embodiment of the invention, a new method called SPAM or another name may be created that may be used to indicate the presence of spam. The invention is not limited to the particular word used to name the new method, but rather extends to any new method to be added to the existing grammar which may be used to communicate that a previous session was detected to be SPAM. The method body may contain the spammer's signature or other information that may be of use to the SDS.

In addition to using feedback in connection with an SDS reputation system and for the use of personal filters, the feedback available from SIP signaling may be used in other ways as well. For example, the feedback may be useful to prevent the spread of SPAM in a provider's network. Providers can share this information with each other either via SIP signaling or by extending other mechanisms that have previously been defined to allow providers to share information with each other. Additionally, this type of information may be shared by extending mechanisms which are defined by the Extended-Incident Reporting Group of the IETF. The invention is not limited by the particular manner in which the information is used, once generated and transmitted using the SIP signaling described herein.

Optionally, to prevent persons from manipulating the SDS, e.g. via the false reporting of SPAM, credibility scores, identity verification, and other factors may be considered to determine whether the person reporting SPAM has also been detected as a likely SPAM generator. The weight to afford a particular SPAM indication may thus be adjusted based on the reputation of the person reporting the SPAM.

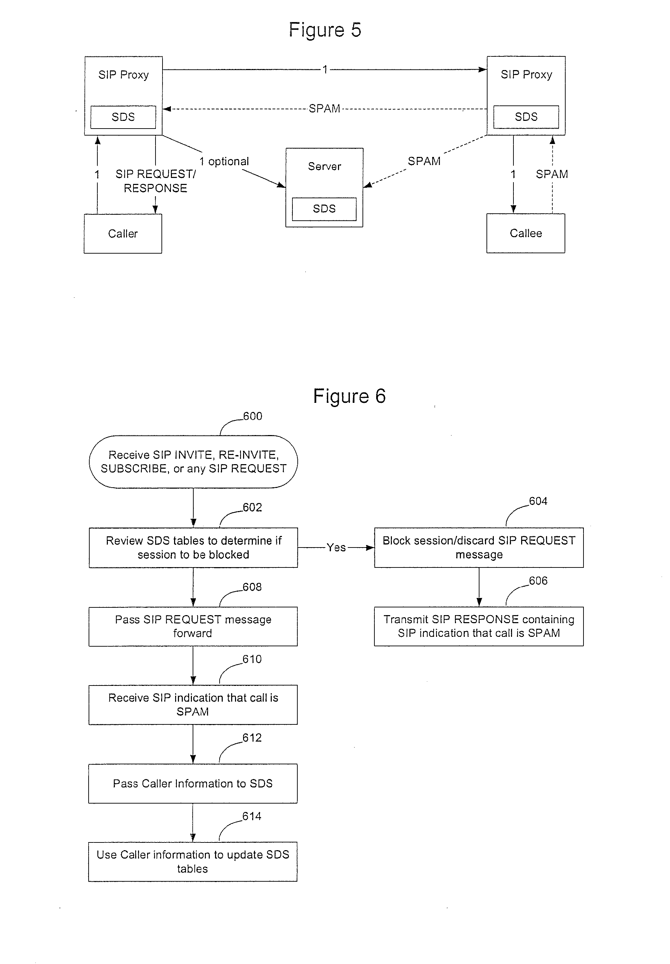

FIG. 5 shows a network environment in which SDS functionality is deployed in connection with one or more SIP proxy servers or on another network element such as a router, gateway, server, or other network element forming part of the network. FIG. 6 shows a process that may be used in connection with the network of FIG. 5 to use the SPAM indication in SIP signaling to reduce the amount of SPAM on the network.

As shown in FIG. 5, when an invite message, re-invite message, SIP subscribe, or other SIP message (Request Message) (1) is sent from the caller to the callee, the request message will be received by a network element having SDS functionality (600) and checked to determine if it contains an indication that it is SPAM (602). For example, the request message may be checked against SDS tables to determine if the session should be blocked as likely to be SPAM as described in greater detail above in connection with FIGS. 1-3. If the session is to be blocked, the request message may be blocked, redirected to a voicemail or other message server, or discarded (604) and optionally additional indication that the request message was blocked may be transmitted via further SIP signaling (606). The SDS functionality may be integrated with the Anti-SPX service described above, may be co-located and separate from the Anti-SPX service, or may be independent of the anti-SPX service. Optionally, SPAM indications may be passed to the anti-SPX service to enable the anti-SPX service to build blacklists and personal filters based on the SPAM feedback described herein.

If the request message is not blocked, it will be passed forward on the network (608). More than one SIP proxy server 404 may review the request message and apply their own tables to the request message so that local filtering may occur without requiring synchronization of SIP tables between SIP proxy servers and other network elements having SDS functionality. The invention is not limited in this manner as a centralized rather than distributed process may be used as well.

If the request message makes it to the callee, the callee has the option of accepting the call and then signaling that the call was SPAM, rejecting the call and signaling that the call was SPAM, or canceling the call and indicating that the call is SPAM. Alternatively, the call may be re-routed to the callee's voice-mail so that the callee may pick up the message at a later time. Regardless of how the callee handles the invite, the callee may respond with a SIP message indicating the presence of SPAM (610). The callee may do this in several ways using SIP signaling, as described in greater detail herein.

In general, several of the methods described above enable the callee or one or more of the network elements configured to handle the SIP signaling to add caller information to the SIP message containing the SPAM indication (612) so that the network element(s) with SDS functionality may update their SDS tables (614). Over time, the network elements with SDS functionality may build up a reputation score for known spammers that may be used to prevent known spammers from initiating SIP sessions on the network. This may be used to reduce or eliminate sources of SPAM on the network. Similarly, where the SDS is not integrated with the Anti-SPX service described above, the feedback may be provided to the anti-SPX service to enable it to build and distribute blacklists and/or personal filters.

Although extensions to SIP have been described in connection with enabling the presence of SPAM to be indicated on a network, the invention is not limited in this manner as the same extensions may be used to describe the non-presence of SPAM. For example, the network may determine that a call is likely to be SPAM but may forward the call to the intended recipient anyway. The callee in this instance could use the SPAM extensions to SIP described herein to indicate that the call is not SPAM and that it should be connected in the normal manner. Optionally, additionally, the absence of a response may be used by the SDS to determine that a call is not likely to have been SPAM. For example, where the SIP signaling occurs on a constrained path through the network such that a given entity along the SIP signaling path will receive any SIP response, the failure of the entity on the path to receive a SIP response indicating that the call was SPAM may be used by the entity to determine that the SIP request was not associated with SPAM. In this instance a white list may be updated to indicate the lack of a response.

White lists and black lists may be used to maintain SPAM scores for persons making telephone calls, and optionally may be stored on a per receiver basis. Thus, while a particular person may find calls from a given sender to be SPAM, other people may not similarly interpret the telephone calls and thus may choose to not report the calls as SPAM. Accordingly, different white/black lists may be implemented for a given sender in a receiver dependent fashion if desired.

FIG. 7 shows an embodiment of a computer platform that may be configured to implement the SDS functionality and anti-SPX service described herein. The computer platform may be part of a network element, a gateway, a signaling server, a multimedia mailbox server, a general purpose computer, or another network element implemented to perform other functions on the network.

In the embodiment shown in FIG. 7, the computer platform 700 includes a processor 702 containing control logic 704 configured to implement the functions associated with the SDS and anti-SPX service described herein. The computer platform may also include a memory 706 configured to store anti-SPX software 708 and a database of SPX tables 710 containing data for use by the anti-SPX software 708 to enable messages to be scored. For example, the SPX tables 710 may include the white and black lists, voice signatures, and other information described above that may enable the anti-SPX service to score communications. The control logic 704 may selectively retrieve data and instructions from the memory to enable the processor to implement the functions associated with the anti-SPX service described herein and encoded into the anti-SPX software 708.

The memory 706 may also store SIP Signaling software 712 and SDS software 714, and a database of SDS tables 716 containing data for use by the SDS software 714 to enable the SPAM information to be used to filter SPAM from the network. For example, the SDS tables 716 may include the white and black lists and other data structures useful to analyze new SIP sessions on the network. The control logic 704 may selectively retrieve data and instructions from the memory 706 to enable the processor 702 to implement the functions associated with the SDS functionality described herein and encoded into the SDS software 714. Additionally, the control logic 704 may selectively retrieve data and instructions from the memory 706 to enable the processor 702 to implement the functions associated with SIP signaling so that the computer platform may send and receive SIP messages on a computer network.

The computer platform may include many other components to enable it to operate in a conventional manner to perform general computer processing operations. For example, the computer platform may include a network interface 718 configured to enable messages to be received by the computer platform for processing in connection with the anti-SPX, SDS, and SIP signaling functions described herein.

Feedback from a user may be input by the user by pressing a button on a standard telephone, computer keyboard, computer mouse, trackball, touch sensitive screen, soft key, or in another manner. The invention is not limited to any particular way in which the user physically inputs an indication that a particular call is SPAM as many different user interfaces and data input devices may be used to enable the user to indicate that a particular session was SPAM.

Although embodiments of the invention have been described in connection with the use of a simple user agent, the invention is not limited in this manner as back to back user agents (B2BUA) may be used, optionally in place of the SIP proxy, to implement the SIP signaling methods described herein. B2BUAs function as two user agents working back-to-back to control calls through it. Unlike a SIP proxy, which operates to pass SIP signaling messages on the network, back-to-back user agents may modify calls and present the calls in a different form on the network. Thus, the user agents, for example clients 400 and 402 of FIG. 4, may be implemented using B2BUAs if desired without departing from the scope of the invention. Other entities that are commonly used to implement SIP signaling can similarly be used as well and the invention is not limited to the several examples provided herein. For example, SIP entities can use media path 408 to transmit a predefined digit code for example by emulating Dual Tone MultiFrequency (DTMF) functionality to generate DTMF digits, such as the codes specified in IETF RFC 2833, to indicate the presence of SPAM.

The functions described above may be implemented as a set of program instructions that are stored in a computer readable memory and executed on one or more processors on the computer platform. However, it will be apparent to a skilled artisan that all logic described herein can be embodied using discrete components, integrated circuitry such as an Application Specific Integrated Circuit (ASIC), programmable logic used in conjunction with a programmable logic device such as a Field Programmable Gate Array (FPGA) or microprocessor, a state machine, or any other device including any combination thereof. Programmable logic can be fixed temporarily or permanently in a tangible medium such as a read-only memory chip, a computer memory, a disk, or other storage medium. Programmable logic can also be fixed in a computer data signal embodied in a carrier wave, allowing the programmable logic to be transmitted over an interface such as a computer bus or communication network. All such embodiments are intended to fall within the scope of the present invention.

It should be understood that various changes and modifications of the embodiments shown in the drawings and described in the specification may be made within the spirit and scope of the present invention. Accordingly, it is intended that all matter contained in the above description and shown in the accompanying drawings be interpreted in an illustrative and not in a limiting sense. The invention is limited only as defined in the following claims and the equivalents thereto.

The invention may be further understood with reference to the following clauses:
1. A method of using Session Initiation Protocol (SIP) signaling to indicate SPAM, the method comprising the steps of: receiving an unsolicited SIP REQUEST message from a first user; and transmitting a second SIP message indicating that the SIP REQUEST message was SPAM.
2. The method of clause 1, wherein the second SIP message is a SIP RESPONSE message.
3. The method of clause 2, wherein the SIP RESPONSE message contains a SPAM error code indicating that the SIP REQUEST message was SPAM.
4. The method of clause 3, further comprising the steps of changing the SPAM error code to a different error code; and transmitting a second SIP RESPONSE message with the different error code to the first user.
5. The method of clause 2, wherein the SIP RESPONSE message includes a header indicating that the SIP REQUEST message was SPAM.
6. The method of clause 5, wherein the header is an extension to a SIP header defined to be used for another purpose.
7. The method of clause 5, wherein the header is a header different than other standard-defined SIP headers and is defined specifically to carry SPAM information.
8. The method of clause 1, wherein the second SIP message is a second SIP REQUEST message containing an indication of a sender of the unsolicited SIP REQUEST message.
9. The method of clause 8, wherein the second SIP REQUEST message contains a method type configured to indicate the presence of SPAM.
10. The method of clause 8, wherein the second SIP REQUEST message includes a header indicating that the unsolicited SIP REQUEST message was SPAM.
11. The method of clause 10, wherein the header is an extension to a SIP header defined to be used for another purpose.
12. The method of clause 10, wherein the header is a header different than other standard-defined SIP headers and defined specifically to carry SPAM information.
13. A computer-readable medium containing instructions for controlling at least one processor to perform a method of determining the presence of SPAM from Session Initiation Protocol (SIP) signaling, the method comprising: receiving a SIP message indicating that a previous SIP REQUEST message was SPAM; and updating SPAM Detection Service (SDS) tables with information from the SIP message.
14. The computer-readable medium of clause 13, wherein the step of updating the SDS tables comprises extracting an identity of an entity associated with the previous SIP REQUEST message and adding an indication to the SDS tables that the entity associated with the previous SIP REQUEST message has been reported as having generated at least one SPAM message.
15. The computer-readable medium of clause 13, wherein the step of updating the SDS tables comprises updating at least one blacklist based on the information from the SIP message.
16. The computer-readable medium of clause 13, wherein the step of updating the SDS tables comprises updating at least one white list based on the information from the SIP message.
17. A Session Initiation Protocol (SIP) message, comprising: a start line; one or more headers; an empty line; and a message body; wherein one or more of the start line, headers, empty line, and message body contain an indication that a session is or was associated with SPAM.
18. The SIP message of clause 17, wherein the start line contains an indication that the SIP message is a SIP REQUEST message and contains a method type indicating that the SIP REQUEST message contains information associated with an earlier SPAM message.
19. The SIP message of clause 17, wherein at least one of the one or more headers is a SPAM header containing information related to at least one of an earlier SPAM message and a sender of an earlier SPAM message.
20. The SIP message of clause 17, wherein the SIP message is a SIP RESPONSE message.

## Claims

1. A method of determining an identity of an entity placing a call, the method comprising the steps of:
analyzing a signal sample associated with the entity placing the call;
performing a signal source recognition process on the signal sample to obtain a signal signature associated with the entity placing the call; and
comparing the signal signature against signal signatures of entities known to place unsolicited calls; and
determining if the call is likely to be an unsolicited call from the result of the signal signature comparison.

2. A method as defined in claim 1, wherein the signal sample is a voice signal sample, the signal source recognition process is a voice recognition process that produces a voice signature for comparison against voice signatures of entities known to place unsolicited calls..

3. A method as defined in claim 2, wherein:
the step of analyzing a voice sample associated with the entity placing the call is performed by an anti-SPX service;
the step of performing a voice recognition process on the voice sample is performed by the anti-SPX service; and
the step of comparing the voice signature against voice signatures is performed by the anti-SPX service, and voice signature is compared to voice signatures of entities known to place SPIT calls; and
the step of determining if the call is likely to be an unsolicited call is performed by the anti-SPX service.

4. A method as defined in claim 2, further comprising performing a voice type recognition process.

5. A method as defined in claim 4, wherein the voice type recognition process is configured to determine if the voice sample is associated with a live person, a prerecorded voice, or a machine generated voice.

6. A method as defined in claim 2, wherein the voice sample is obtained in response to a question, the method further comprising the step of analyzing a content of the voice sample, and wherein the step of determining if the call is likely to be unsolicited further, comprises comparing the analyzed content with expected content.

7. A method as defined in claim 1, wherein the signal sample is a fax signal sample, the signal source recognition process comprises a fax signal recognition process that produces a signature for comparison against signatures of entities known to place unsolicited fax calls.

8. A method as defined in claim 1, wherein the signal sample is a video signal sample, the signal source recognition process comprises a video signal recognition process that produces a signature for comparison against signatures of entities known to place unsolicited video calls.

9. Apparatus for determining an identity of an entity placing a call, comprising:
means for analyzing a signal sample associated with the entity placing the call;
means for performing a signal source recognition process on the signal sample to obtain a signal signature associated with the entity placing the call;
means for comparing the signal signature against signal signatures of entities known to place unsolicited calls; and
means for determining if the call is likely to be an unsolicited call from the result of the signal signature comparison.

10. Apparatus as defined in claim 9, wherein the signal sample is a voice signal sample, the means for performing signal source recognition is a voice recognition process that produces a voice signature for comparison against voice signatures of entities known to place unsolicited calls.

11. Apparatus as defined in claim 10, wherein an anti-SPX service element comprises:
the means for analyzing a voice sample associated with the entity placing the call;
the means for performing a voice recognition process on the voice sample;
the means for comparing the voice signature against voice signatures;
the means for determining if the call is likely to be an unsolicited call; and
the means for comparing the voice signature is operable to compare the voice signature to voice signatures of entities known to place SPIT calls.

12. Apparatus as defined in claim 11, wherein the anti-SPX service element further comprises means for performing a voice type recognition process.

13. Apparatus as defined in claim 11, further comprising:
means for posing a question to the caller to elicit the voice sample; and
means for analyzing a content of the voice sample; and
means for comparing the analyzed content with expected content to determine if the call is likely to be SPIT.

14. Apparatus as defined in claim 9, wherein the signal sample is selected from the group consisting of fax signal samples and video signal samples and the means for performing signal source recognition is comprises a fax signal recognition process that produces a signature for comparison against signatures of entities known to place unsolicited fax calls.

15. Apparatus as defined in claim 9, wherein the signal sample is a video signal sample, and the means for performing signal source recognition comprises a video signal recognition process that produces a signature for comparison against signatures of entities known to place unsolicited video calls.
